# EUROPEAN PATENT SPECIFICATION

(11) **EP 3 427 959 B1**
(45) Date of publication and mention of the grant of the patent: **12.08.2020**
(21) Application number: 18182570.4
(22) Date of filing: 10.07.2018
(51) Int. Cl.: B41J 2/175, B41J 29/38, B41J 29/393, G06F 3/12

(54) **APPARATUS AND METHOD FOR DETERMINING AMOUNT OF INK**
VORRICHTUNG UND VERFAHREN ZUR BESTIMMUNG DER TINTENMENGE
APPAREIL ET PROCÉDÉ DE DÉTERMINATION D'UNE QUANTITÉ D'ENCRE

(30) Priority: 14.07.2017 US 201715650001
(43) Date of publication of application: 16.01.2019
(60) Divisional application: 20175991.7
(73) Proprietor: Funai Electric Co., Ltd., Daito, Osaka, 574-0013 (JP)
(72) Inventor: BARKLEY, Lucas, Lexington, KY Kentucky 40509 (US); DEBOARD, Bruce, Georgetown, KY Kentucky 40324 (US); JONES, Brian, Lexington, KY Kentucky 40513 (US)
(74) Representative: Becker & Kurig Partnerschaft Patentanwälte PartmbB

(56) References cited:
- WO-A1-2015/088828
- WO-A1-2017/078722
- US-A1- 2007 097 161
- US-A1- 2018 074 768

## Description

### FIELD

This invention relates to the field of inkjet printers and printhead cartridges. More particularly, this invention relates to a system for advertising ink dot count values over a network when a printhead cartridge is moved from one printer to another.

### BACKGROUND

Nonvolatile memory in disposable inkjet printhead cartridges is typically very small to keep manufacturing costs down. Re-writable nonvolatile memory is more expensive than one-time programmable memory. Because of these constraints, disposable inkjet printheads provide only a coarse indication of ink remaining due to a small number of ink levels encoded in the printhead's limited nonvolatile memory. When a printhead is moved from one printer to another, it carries only this very coarse ink level indication with it. The new printer must make an assumption about where the actual ink level is between the coarse levels that are reported by the printhead nonvolatile memory. In applications such as business accounting, this is unacceptable because accurate dot counting is important.

US 2007/097161 A1 discloses a printer 240 calculating the amount of ink used only for printing as a number of discharged ink shots, and sending this shot count with the printer serial number and ink cartridge ID to a server. The server saves the shot count, printer serial number, ink cartridge ID, and an error correction code as status information. The server or server upstream from the server can reliably determine the number of ink shots used by the printer only for printing from this status information.

What is needed, therefore, is a way to more precisely keep track of the remaining ink level in an inkjet printhead cartridge as the cartridge moves from one printer to another.

### SUMMARY

The present invention is provided by appended claims 1 and 10. Beneficial embodiments are provided in the dependent claims. The system described herein solves the problem of determining the exact amount of ink remaining in printhead cartridges used in printers that are all connected to the same network and that can communicate with each other. Each printer keeps a history of printhead cartridges that have been used in the printer. Each printhead cartridge stores in its memory a status indicator value that indicates whether the cartridge has ever been used before in any printer.

When a printer receives a printhead cartridge that has been previously used, the printer sends a request on the network that in effect says, "I have a used printhead installed having serial number X. Any printer that has information about this printhead, please report to me." Each printer on the network having the matching printhead serial number in their history then reports over the network the last recorded ink dot count associated with the matching printhead serial number. The requesting printer chooses the most up-to-date response based either on the highest dot count or the latest time-stamp, if available. The requesting printer then updates its memory using the dot count from the most up-to-date response and begins counting dots from that updated count for subsequent print jobs performed using the installed printhead. Based on a known total available ink dot count for a particular cartridge ink reservoir size, the printer can precisely determine the amount of ink remaining in the cartridge.

Accordingly, preferred embodiments provide a system in which inkjet printers are not solely dependent on a course ink indication level carried in the memory of the inkjet printhead cartridges to estimate an amount of ink remaining.

Preferred embodiments also provide a system in which inkjet printers connected to a network work together to determine the most accurate ink level information for printhead cartridges installed in the printers.

In one aspect, the invention provides a method for determining an amount of ink used by first inkjet printhead cartridge of a first inkjet printer connected to a network to which second inkjet printers are connected. The method comprises: (a) accessing by the first inkjet printer a first printhead identification value of the first inkjet printhead cartridge; (b) requesting by the first inkjet printer a request to the second inkjet printers to seek information related to the first printhead identification value; (c) receiving by the first inkjet printer one or more historical record values associated with the first printhead identification value from the one or more of the second inkjet printers; (d) storing by the first inkjet printer a latest historical record value received from the one or more of the second inkjet printers; and (e) incrementing a first historical record value based on a number of ink dots ejected from the first inkjet printhead cartridge when printing is performed after the first inkjet printhead cartridge is installed in the first inkjet printer.

In another aspect, in the above method, the method further comprises: (f) after installing the first inkjet printhead cartridge in the first inkjet printer, the first inkjet printer accessing a status indicator value of the first inkjet printhead cartridge, to determine whether the first inkjet printhead cartridge has been used or not.

In another aspect, in the above method, the steps (a), (b), (c), (d), (e) and (f) of the method are performed by a processor in the first inkjet printer.

In another aspect, in the above method, the historical record value is an ink dot count value, and the method further comprises: (g) after receiving the request from the first inkjet printer, each of the second inkjet printers determines whether the first printhead identification value is stored therein; (h) determining by the one or more of second inkjet printers the ink dot count value associated with the first printhead identification value; (i) generating by the one or more of the second inkjet printers one or more responses that each include the ink dot count value associated with the first printhead identification value; (j) sending the ink dot count values associated with the first printhead identification value to the first inkjet printer.

In another aspect, in the above method, the steps (g), (h), (i) and (j) are performed by processors of the second inkjet printers.

In another aspect, in the above method, the method further comprises: determining a remaining ink level value for the first inkjet printhead cartridge based on the first historical record value stored in the first inkjet printer.

In another aspect, in the above method, the step (d) comprises: choosing a highest historical record value based on comparing the first historical record value contained in the first inkjet printhead cartridge after installation and the one or more historical record values received from the second inkjet printers.

In another aspect, in the above method, the historical record value is a timestamp value and further comprises: (k) determining by the one or more of second inkjet printers one or more timestamp values associated with the first printhead identification value; and (1) receiving by the first inkjet printer the one or more timestamp values from the second inkjet printers.

In another aspect, in the above method, the method further comprises: determining a most recent timestamp value based on comparing a timestamp value contained in the first inkjet printhead cartridge after installation and the one or more timestamp values received from the second inkjet printers.

In another aspect, the invention provides a system comprising a first inkjet printer a plurality of second inkjet printers, and an apparatus configured for determining an amount of ink used by a first inkjet printhead cartridge that is installed in the first inkjet printer, and a network to which the first inkjet printer and the second inkjet printers are connected. The first inkjet printhead cartridge includes a printhead memory device that stores a first printhead identification value. The first inkjet printer comprises a first memory device for storing a first historical record value, and a first processor that executes instructions for accessing the first printhead identification value prior to using the first inkjet printhead cartridge after installation, and generating a request to seek information related to the first printhead identification value from the second inkjet printers. The one or more of the second inkjet printers of which each comprises: a second memory device for storing one or more printhead identification values in association with one or more historical record values; a second processor that executes instructions for determining whether any of the printhead identification values matches the first printhead identification value, and determining a historical record value associated with the first printhead identification value. The first processor further executes instructions for determining a latest historical record value based on comparing the historical record values, and incrementing the first historical record value stored in the first memory device based on a number of ink dots ejected from the first inkjet printhead cartridge after installation in the first inkjet printer.

In another aspect, in the above apparatus, the printhead memory device of the first inkjet printhead cartridge stores a status indicator value that indicates a used status or a not-used status; and the first processor executes instructions for accessing the status indicator value prior to using the first inkjet printhead cartridge after installation, determining whether the first inkjet printhead cartridge has been used or has not been used prior to the installation of the first inkjet printhead cartridge based on the status indicator value, and generating the request when the first inkjet printhead cartridge has been used.

In another aspect, in the above apparatus, the first processor executes instructions to determine a remaining ink level value for the first inkjet printhead cartridge based on a first ink dot count value stored in the first memory device.

In another aspect, in the above apparatus, the first historical record value is a first ink dot count value, and the first processor executes instructions for storing the first ink dot count value in the first memory device in association with the first printhead identification value.

In another aspect, in the above apparatus, the historical record values are timestamp values, the second processor executes instructions to determine the one or more timestamp values associated with the first printhead identification value; and the first processor executes instructions to receive the one or more timestamp values from the one or more of the second inkjet printers.

In another aspect, in the above apparatus, the first processor executes instructions for determining a most recent timestamp value based on comparing a timestamp value that is contained in the first inkjet printhead cartridge of the first inkjet printer after installation and the one or more timestamp values received from the second inkjet printers.

### BRIEF DESCRIPTION OF THE DRAWINGS

Other embodiments of the invention will become apparent by reference to the detailed description in conjunction with the figures, wherein elements are not to scale so as to more clearly show the details, wherein like reference numbers indicate like elements throughout the several views, and wherein:
FIG. 1 depicts multiple inkjet printers connected to a network according to a preferred embodiment;
FIG. 2 depicts a method for advertising dot counts of inkjet printhead cartridges to inkjet printers connected to a network according to a preferred embodiment; and
FIGS. 3A and 3B are exemplary tabular representations of ink dot count values stored in printer memory in association with printhead identification values for two different printhead cartridges.

### DETAILED DESCRIPTION

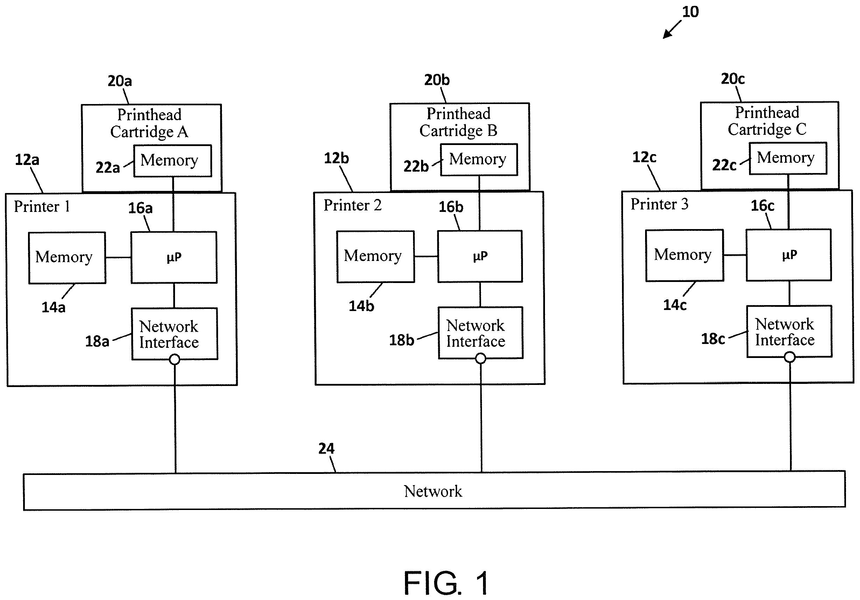

As shown in FIG. 1, an apparatus 10, i.e., an inkjet printer system 10 includes multiple inkjet printers 12a, 12b, 12c connected to a network 24, such as an Ethernet network. Each of the printers 12a, 12b, 12c includes a memory device 14a, 14b, 14c (for example, nonvolatile memory device), a processor 16a, 16b, 16c, and a network interface 18a, 18b, 18c. The network interfaces 18a, 18b, 18c enable communications between each of the printers 12a, 12b, 12c via the network 24. Installed in each printer 12a, 12b, 12c is a printhead cartridge 20a, 20b, 20c. Each printhead cartridge 20a, 20b, 20c has a memory device 22a, 22b, 22c (for example, nonvolatile memory device), and contains a quantity of ink in an ink reservoir.

Stored in the memory device 22a, 22b, 22c of each printhead cartridge 20a, 20b, 20c is a numerical or alphanumerical printhead identification value, such as a serial number, that uniquely identifies the printhead cartridge 20a, 20b, 20c. Also stored in each memory device 22a, 22b, 22c is a status indicator value that indicates whether or not the printhead cartridge 20a, 20b, 20c has been used before in any printer. For example, the status indicator value may be a single-bit value, with a binary 1 indicating a new state and a binary 0 indicating a used state.

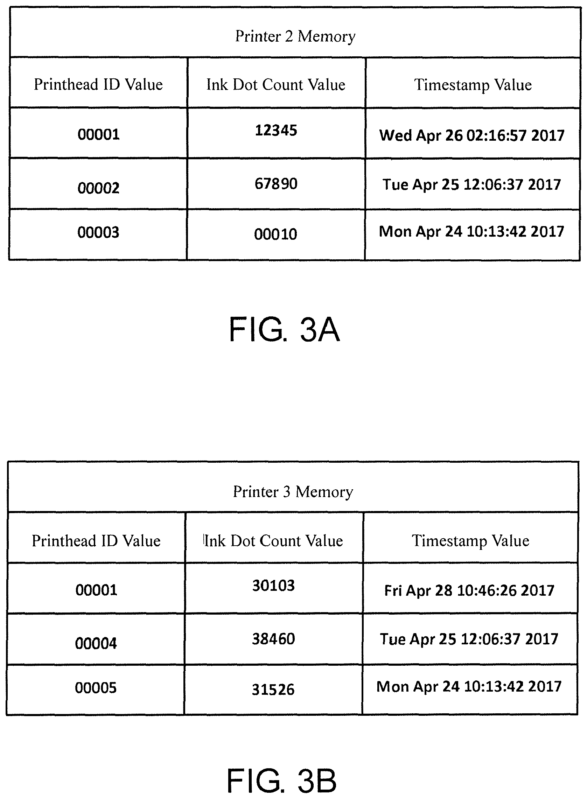

In a preferred embodiment, the memory device 14a, 14b, 14c of each printer 12a, 12b, 12c stores printhead identification values in association with ink dot count values and timestamp values. The ink dot count values and the timestamp values are example of historical record values. Both of or one of the ink dot count values and the timestamp values can be used. The printhead identification values identify all printhead cartridges that have ever been installed in the printer, the ink dot count values indicate the number of ink dots fired from each of the identified printhead cartridges while in use in the printer, and the timestamp values indicate the most recent date/time that each printhead cartridge was used in a print job. FIGS. 3A and 3B depict exemplary tabular representations of ink dot count values stored in association printhead identification values and timestamp values in the memory devices 14b and 14c of the printers 12b and 12c, respectively.

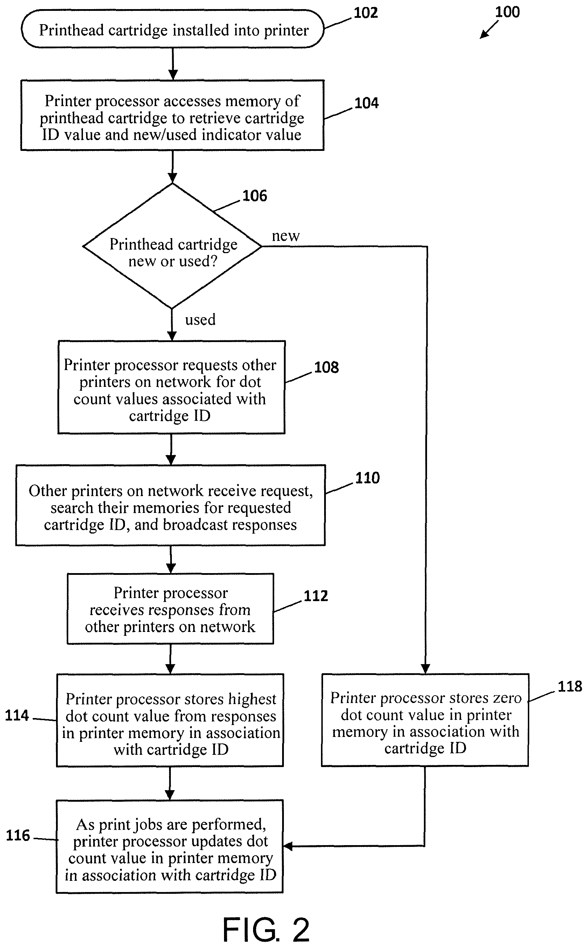

FIG. 2 depicts a preferred embodiment of a method 100 for sharing printhead ink dot count values in an ink jet printer system, such as the system 10 depicted in FIG. 1. When a new or used printhead cartridge, such as the inkjet printhead cartridge 20a (first inkjet printhead cartridge), is installed in a printer, such as the inkjet printer 12a (first inkjet printer, step 102), the processor 16a of the printer accesses the memory device 22a of the cartridge and retrieves the printhead identification value and the status indicator value (step 104). For example, the printhead identification value for the cartridge 20a may be "00001" and its status indicator value may be "0" indicating that cartridge 20a has been used before. Based on determining that the cartridge 20a has been used (step 106), the processor 16a sends a request through the network interface 18a to all other printers connected to the network 24 (step 108). The other inkjet printers 20b, 20c (or second inkjet printers) on the network 24 search their memory devices 14b, 14c for a printhead identification value that matches the value in the request, and each printer having a matching printhead identification value in its memory device sends a response through its network interface 18b, 18c to the network 24 (step 110). Each response includes the ink dot count value that is stored in memory device in association with the matching printhead identification value. For example, if the values depicted in FIG. 3A represent values stored in the memory device 14b of the printer 12b, the response from printer 12b would include the ink dot count value "12345" associated with the printhead identification value "00001." Similarly, if the values depicted in FIG. 3B represent values stored in the memory device 14c of the printer 12c, the response from printer 12c would include the ink dot count value "30103" associated with the printhead identification value "00001."

The processor of the printer 12a receives the responses from the network 24 (step 112), chooses which response is most relevant, which is the response that includes the highest ink dot count value, and stores the highest ink dot count value in the memory device 14a in association with the requested printhead identification value (step 114). For example, the ink dot count value "30103" in the response from printer 12c would be stored in the memory device 14a because it is greater than the ink dot count value "12345" in the response from printer 12b. Thereafter, as ink dots are fired during operation of the printer 12a using the installed printhead cartridge 20a, the ink dot count value associated with the printhead identification value for the printhead cartridge 20a is incrementally updated in the memory device 14a, starting at "30103" (step 116). In alternative embodiments, instead of determining which response includes the highest ink dot count value at step 114, the processor of the printer 12a determines which response includes the most recent timestamp value associated with the reported ink dot count value.

Going back now to step 106, if the status indicator value for the cartridge 20a indicates that the installed cartridge 20a is new (not used) (step 106), the processor of the printer 12a stores an ink dot count value of zero in the memory device 14a in association with the printhead identification value (step 118). Thereafter, as ink dots are fired during operation of the printer 12a using the installed printhead cartridge 20a, the ink dot count value associated with the printhead identification value for the printhead cartridge 20a is incrementally updated in the memory device 14a from an initial count of zero (step 116).

## Claims

1. A method for determining an amount of ink used by first inkjet printhead cartridge (20a) of a first inkjet printer (12a) connected to a network (24) to which second inkjet printers (12b, 12c) are connected, comprising the step of:
(a) accessing by the first inkjet printer (12a) a first printhead identification value of the first inkjet printhead cartridge (20a);
and **characterized in** further comprising the following steps:
(b) requesting by the first inkjet printer the second inkjet printers (12b, 12c) to seek information related to the first printhead identification value;
(c) receiving by the first inkjet printer one or more historical record values associated with the first printhead identification value from the one or more of the second inkjet printers (12b, 12c);
(d) storing by the first inkjet printer (12a) a latest historical record value received from the one or more of the second inkjet printers (12b, 12c); and
(e) incrementing a first historical record value of the first inkjet printer based on a number of ink dots ejected from the first inkjet printhead cartridge (20a) when printing is performed after the first inkjet printhead cartridge (20a) is installed in the first inkjet printer (12a).

2. The method of claim 1, **characterized in that** the method further comprises:
(f) after installing the first inkjet printhead cartridge (20a) in the first inkjet printer (12a), the first inkjet printer (12a) accessing a status indicator value of the first inkjet printhead cartridge (20a), to determine whether the first inkjet printhead cartridge (20a) has been used or not.

3. The method of claim 2, **characterized in that** the steps (a), (b), (c), (d), (e), and (f) are performed by a processor in the first inkjet printer (12a).

4. The method of any one of claims 1 to 3, **characterized in that** the historical record value is an ink dot count value and the method further comprises:
(g) after receiving a request from the first inkjet printer (12a), each of the second inkjet printers (12b, 12c) determines whether the first printhead identification value is stored therein;
(h) determining by the one or more of second inkjet printers (12b, 12c) the ink dot count value associated with the first printhead identification value;
(i) generating by the one or more of the second inkjet printers (12b, 12c) one or more responses that each include the ink dot count value associated with the first printhead identification value;
(j) sending the ink dot count values associated with the first printhead identification value to the first inkjet printer (12a).

5. The method of claim 4, **characterized in that** the steps (g), (h), (i) and (j) are performed by processors of the second inkjet printers (12b, 12c).

6. The method of any one of claims 1 to 5, **characterized in that** the method further comprises determining a remaining ink level value for the first inkjet printhead cartridge (20a) based on a first historical record value stored in the first inkjet printer (12a).

7. The method of any one of claims 1 to 6, **characterized in that** the step (d) comprises:
choosing a highest historical record value based on comparing the first historical record value contained in the first inkjet printer (12a) after installation of the first inkjet printhead cartridge (20a) after installation and the one or more historical record values received from the second inkjet printers (12b, 12c).

8. The method of any one claims 1 to 7, **characterized in that** the historical record value is a timestamp value and the method further comprises:
(k) determining by the one or more of second inkjet printers (12b, 12c) one or more timestamp values associated with the first printhead identification value; and
(1) receiving by the first inkjet printer (12a) the one or more timestamp values from the second inkjet printers (12b, 12c).

9. The method of claim 8, **characterized in that** the method further comprises:
determining a most recent timestamp value based on comparing a timestamp value contained in the first inkjet printer (12a) after installation of the first inkjet printhead cartridge (20a) and the one or more timestamp values received from the second inkjet printers (12b, 12c).

10. A system, comprising:
a first inkjet printer (12a);
a plurality of second inkjet printers (12b, 12c);
an apparatus (10) configured for determining an amount of ink used by a first inkjet printhead cartridge (20a) that is installed in the first inkjet printer (12a) wherein the first inkjet printhead cartridge (20a) includes a first printhead memory device (22a) configured to store a first printhead identification value; and
a network (24) to which the first inkjet printer (12a) and the second inkjet printers (12b, 12c) are connected, **characterized in that**
the first inkjet printer (12a) comprises a first memory device (14a) configured for storing a first historical record value, and a first processor (16a) configured to execute instructions for accessing the first printhead identification value prior to using the first inkjet printhead cartridge (20a) after installation, and generate a request to seek information related to the first printhead identification value from the second inkjet printers (12b, 12c);
the one or more of the second inkjet printers (12b, 12c) of which each comprises:
a second memory device (14b, 14c) configured for storing one or more printhead identification values in association with one or more historical record values;
a second processor (16b, 16c) configured to execute instructions for determining whether any of the printhead identification values matches the first printhead identification value, and determine a historical record value associated with the first printhead identification value;
the first processor (16a) is further configured to execute instructions for determining a latest historical record value based on comparing the historical record values, and increment a first historical record value stored in the first memory device (22a) based on a number of ink dots ejected from the first inkjet printhead cartridge (20a) after installation in the first inkjet printer (12a).

11. The system of claim 10, **characterized in that**
the printhead memory device (22a) of the first inkjet printhead cartridge (20a) is configured to store a status indicator value that indicates a used status or a not-used status; and
the first processor (16a) is configured to execute instructions for accessing the status indicator value prior to using the first inkjet printhead cartridge (20a) after installation, determine whether the first inkjet printhead cartridge (30a) has been used or has not been used prior to the installation of the first inkjet printhead cartridge (20a) based on the status indicator value, and generate the request when the first inkjet printhead cartridge (30a) has been used.

12. The system of claim 10 or 11, **characterized in that**
the first processor (16a) is configured to execute instructions to determine a remaining ink level value for the first inkjet printhead cartridge (30a) based on a first ink dot count value stored in the first memory device (14a).

13. The system of any one of claims 10 to 12, **characterized in that** the first historical record value is a first ink dot count value and the first processor (16a) is configured to execute instructions for storing the first ink dot count value in the first memory device (14a) in association with the first printhead identification value.

14. The system of any one of claims 10 to 13, **characterized in that**
the historical record values are timestamp values,
the second processor (16b, 16c) are configured to execute instructions to determine the one or more timestamp values associated with the first printhead identification value; and
the first processor (16a) is configured to execute instructions to receive the one or more timestamp values from the one or more of the second inkjet printers (12b, 12c).

15. The system of claim 14, **characterized in that**
the first processor (16a) is configured to execute instructions for determining a most recent timestamp value based on comparing a first timestamp value that is contained in the first inkjet printer (12a) after installation of the first inkjet printhead cartridge (20a) and the one or more timestamp values received from the second inkjet printers (12b, 12c).

## Patentansprüche

1. Verfahren zum Bestimmen einer Tintenmenge, die von der ersten Tintenstrahl-Druckkopfpatrone (20a) eines ersten Tintenstrahldruckers (12a) verwendet wird, der an ein Netzwerk (24) angeschlossen ist, an dem zweite Tintenstrahldrucker (12b, 12c) angeschlossen sind, umfassend den Schritt von:
(a) Zugreifen, durch den ersten Tintenstrahldrucker (12a), auf einen ersten Druckkopf-Identifikationswert von der ersten Tintenstrahl-Druckkopfpatrone (20a) und gekennzeichnet in ferner umfassend die folgenden Schritte;
(b) Anfragen, durch den ersten Tintenstrahldrucker (12a), von den zweiten Tintenstrahldrucker (12b, 12c), um Informationen, die sich auf den ersten Druckkopf-Identifikationswert beziehen, einzuholen;
(c) Empfangen, durch den ersten Tintenstrahldrucker, einen oder mehrere historische Datensatzwerte, die dem ersten Druckkopf-Identifikationswert von dem einen oder mehreren der zweiten Tintenstrahldruckern (12b, 12c) zugeordnet sind;
(d) Lagern, durch den ersten Tintenstrahldrucker (12a), eines neusten historischen Datensatzwerts, der von dem einem oder mehreren der zweiten Tintenstrahldrucker (12b, 12c) empfangen wurde; und
(e) Erhöhen eines ersten historischen Datensatzwerts des ersten Tintenstrahldruckers auf der Grundlage einer Reihe von Tintenpunkten, die aus der ersten Tintenstrahl-Druckkopfpatrone (20a) ausgeworfen werden, wenn Drucken durchgeführt wird, nachdem die erste Tintenstrahl-Druckkopfpatrone (20a) in dem ersten Tintenstrahldrucker (12a) installiert wird.

2. Verfahren gemäß Anspruch 1, **dadurch gekennzeichnet, dass** das Verfahren ferner umfasst:
(f) nach Installieren der ersten Tintenstrahl-Druckkopfpatrone (20a) in dem ersten Tintenstrahldrucker (12a), greift der erste Tintenstrahldrucker (12a) auf einen Statusindikatorwert der ersten Tintenstrahl-Druckkopfpatrone (20a) zu, um zu bestimmen, ob die erste Tintenstrahl-Druckkopfpatrone (20a) verwendet wurde oder nicht.

3. Verfahren gemäß Anspruch 2, **dadurch gekennzeichnet, dass** die Schritte (a), b), (c), (d), (e) und (f) durch einen Prozessor in dem ersten Tintenstrahldrucker (12a) durchgeführt werden.

4. Verfahren gemäß irgendeinem der Ansprüche 1 bis 3, **dadurch gekennzeichnet, dass** der historische Datensatzwert ein Tintenpunktzählwert ist und das Verfahren ferner umfasst:
(g) nach Empfangen einer Anfrage des ersten Tintenstrahldruckers (12a) bestimmt jeder der zweiten Tintenstrahldrucker (12b, 12c), ob der erste Druckkopf-Identifikationswert darin gespeichert ist;
(h) Bestimmen des Tintenpunktzählwerts, der dem ersten Tintenkopf-Identifikationswert zugeordnet ist, durch den einen oder mehrere der zweiten Tintenstrahldrucker (12b, 12c);
(i) Erzeugen einer oder mehrerer Antworten, die jeweils den Tintenpunktzählwert enthalten, der dem ersten Druckkopf-Identifikationswert zugeordnet ist, durch den einen oder mehrere der zweiten Tintenstrahldrucker (12b, 12c);
(j) Senden der Tintenpunktzählwerte, die dem ersten Druckkopf-Identifikationswert zugeordnet sind, an den ersten Tintenstrahldrucker (12a).

5. Verfahren gemäß Anspruch 4, **dadurch gekennzeichnet, dass** die Schritte (g), (h), (i) und (j) durch Prozessoren der zweiten Tintenstrahldrucker (12b, 12c) durchgeführt werden.

6. Verfahren gemäß irgendeinem der Ansprüche 1 bis 5, **dadurch gekennzeichnet, dass** das Verfahren ferner Bestimmen eines verbleibenden Tintenstandwerts für die erste Tintenstrahl-Druckkopfpatrone (20a) auf der Grundlage eines ersten historischen Datensatzswerts umfasst, der in dem ersten Tintenstrahldrucker (12a) gespeichert ist.

7. Verfahren gemäß irgendeinem der Ansprüche 1 bis 6, **dadurch gekennzeichnet, dass** der Schritt (d) umfasst:
Auswählen eines höchsten historischen Datensatzwerts basierend auf Vergleichen des ersten historischen Datensatzwerts, der in dem ersten Tintenstrahldrucker (12a) nach Installation der ersten Tintenstrahl-Druckkopfpatrone (20a) enthalten ist nach der Installation, und des einen oder mehrerer historischer Datensatzwerte, die von den zweiten Tintenstrahldruckern (12b, 12c) empfangen werden.

8. Verfahren gemäß irgendeinem der Ansprüche 1 bis 7, **dadurch gekennzeichnet, dass** der historische Datensatzwert ein Zeitstempelwert ist und das Verfahren ferner umfasst:
k) Bestimmen eines oder mehrerer Zeitstempelwerte, die dem ersten Druckkopf-Identifikationswert zugeordnet sind, durch den einen oder mehrere zweiten Tintenstrahldrucker (12b, 12c); Und
1) Empfangen den einen oder mehrere Zeitstempelwerte von den zweiten Tintenstrahldruckern (12b, 12c), durch den ersten Tintenstrahldrucker (12a).

9. Verfahren gemäß Anspruch 8, **dadurch gekennzeichnet, dass** das Verfahren ferner umfasst:
Bestimmen eines aktuellsten Zeitstempelwerts basierend Vergleichen eines Zeitstempelwerts, der in dem ersten Tintenstrahldrucker (12a) nach der Installation der ersten Tintenstrahl-Druckkopfpatrone (20a) enthalten ist, und des einen oder mehreren Zeitstempelwerte, die von den zweiten Tintenstrahldruckern (12b, 12c) empfangen werden.

10. System, umfassend:
einen ersten Tintenstrahldrucker (12a);
eine Vielzahl von zweiten Tintenstrahldruckern (12b, 12c);
eine Vorrichtung (10), die konfiguriert ist, um eine Tintenmenge zu bestimmen, die durch eine erste Tintenstrahl-Druckkopfpatrone (20a) verwendet wird, die in dem ersten Tintenstrahldrucker (12a) installiert ist, wobei die erste Tintenstrahl-Druckkopfpatrone (20a) ein erstes Druckkopf-Speichergerät (22a) enthält, das konfiguriert ist, um einen ersten Druckkopf-Identifikationswerts zu speichern; Und
ein Netzwerk (24), an das der erste Tintenstrahldrucker (12a) und die zweiten Tintenstrahldrucker (12b, 12c) verbunden sind,
der erste Tintenstrahldrucker (12a) umfasst ein erstes Speichergerät (14a), das konfiguriert ist, um einen ersten historischen Datensatzwert zu speichern, und einen ersten Prozessor (16a), der konfiguriert ist, um Anweisungen für Zugreifen auf den ersten Druckkopf-Identifikationswert auszuführen, bevor die erste Tintenstrahl-Druckkopfpatrone (20a) nach Installation verwendet wird, und um eine Anfrage zum Einholen von Informationen, die sich auf den ersten Druckkopf-Identifikationswert aus den zweiten Tintenstrahldruckern (12b, 12c) beziehen, zu erzeugen;
der eine oder mehrere der zweiten Tintenstrahldrucker (12b, 12c), von denen jeder umfasst:
ein zweites Speichergerät (14b, 14c), das konfiguriert ist, um die einen oder mehrere Druckkopf-Identifikationswerte in Verbindung mit einem oder mehreren historischen Datensatzwerten zu speichern;
ein zweiter Prozessor (16b, 16c), der konfiguriert ist, um Anweisungen zum Bestimmen, ob einer der Druckkopf-Identifikationswerte mit dem ersten Druckkopf-Identifikationswert übereinstimmt, auszuführen, und einen historischen Datensatzwert zu bestimmen, der dem ersten Druckkopf-Identifikationswert zugeordnet ist;
der erste Prozessor (16a) ferner konfiguriert ist, um Anweisungen zum Bestimmen eines neusten historischen Datensatzwerts basierend auf Vergleichen der historischen Datensatzwerte ausgeführt werden und Erhöhen eines ersten historischen Datensatzwerts, der in dem ersten Speichergerät (22a) gespeichert ist, basierend auf einer Anzahl von Tintenpunkten, die nach der Installation in dem ersten Tintenstrahldrucker (12a) aus der ersten Tintenstrahl-Druckkopfpatrone (20a) ausgeworfen wurden.

11. System gemäß Anspruch 10, **dadurch gekennzeichnet, dass**
das Druckkopfspeichergerät (22a) der ersten Tintenstrahl-Druckkopfpatrone (20a) konfiguriert ist, um einen Statusindikatorwert zu speichern, der einen verwendeten Status oder einen nicht verwendeten Status angibt und
der erste Prozessor (16a) konfiguriert ist, um Anweisungen für Zugreifen auf den Statusindikatorwert auszuführen, bevor die erste Tintenstrahl-Druckkopfpatrone (20a) nach der Installation verwendet wird, bestimmen, ob die erste Tintenstrahl-Druckkopfpatrone (30a) vor der Installation der ersten Tintenstrahl-Druckkopfpatrone (20a) basierend auf dem Statusindikatorwert verwendet wurde oder nicht verwendet wurde, und Erzeugen der Anfrage, wenn die erste Tintenstrahl-Druckkopfpatrone (30a) verwendet wurde.

12. System gemäß der Ansprüche 10 oder 11, **dadurch gekennzeichnet, dass**
der erste Prozessor (16a) konfiguriert ist, um Anweisungen auszuführen, um einen verbleibenden Tintenstandwert für die erste Tintenstrahl-Druckkopfpatrone (30a) basierend auf einem ersten Tintenpunktzählwert zu bestimmen, der auf dem ersten Speichergerät (14a) gespeichert ist.

13. System gemäß irgendeinem der Ansprüche 10 bis 12, **dadurch gekennzeichnet, dass** der erste historische Datensatzwert ein erster Tintenpunktzählwert ist und der erste Prozessor (16a) konfiguriert ist, um Anweisungen zum Speichern des ersten Tintenpunktzählwerts in dem ersten Speichergerät (14a) in Verbindung mit dem ersten Druckkopf-Identifikationswert auszuführen.

14. System gemäß irgendeinem der Ansprüche 10 bis 13, **dadurch gekennzeichnet, dass**
die historischen Datensatzwerte Zeitstempelwerte sind,
die zweiten Prozessoren (16b, 16c) konfiguriert sind, um Anweisungen auszuführen, um den einen oder mehrere Zeitstempelwerte zu bestimmen, die dem ersten Druckkopf-Identifikationswert zugeordnet sind; und
der erste Prozessor (16a) konfiguriert ist, um Anweisungen auszuführen, um den einen oder mehrere Zeitstempelwerte von dem einem oder mehreren der zweiten Tintenstrahldrucker (12b, 12c) zu empfangen.

15. System gemäß Anspruchs 14, **dadurch gekennzeichnet, dass**
der erste Prozessor (16a) konfiguriert ist, um Anweisungen zum Bestimmen eines neusten Zeitstempelwerts auszuführen, basierend auf Vergleichen eines ersten Zeitstempelwerts, der in dem ersten Tintenstrahldrucker (12a) nach der Installation der ersten Tintenstrahl-Druckkopfpatrone (20a) enthalten ist, und den einen oder mehrere Zeitstempelwerte, die von den zweiten Tintenstrahldruckern (12b, 12c) empfangen werden.

## Revendications

1. Procédé pour déterminer une quantité d'encre utilisée par une cartouche de première tête d'impression à jet d'encre (20a) d'une première tête d'impression à jet d'encre (12a) connectée à un réseau (24) auquel des deuxièmes imprimantes à jet d'encre (12b, 12c) sont connectées, comprenant les étapes suivantes :
(a) accéder, grâce à la première imprimante à jet d'encre (12a), à une valeur d'identification de première tête d'impression de la cartouche de première tête d'impression à jet d'encre (20a) ;
et **caractérisé en ce qu'**il comprend en outre les étapes suivantes :
(b) demander, grâce à la première imprimante à jet d'encre (12a), aux deuxièmes imprimantes à jet d'encre (12b, 12c) de chercher de l'information concernant la valeur d'identification de première tête d'impression ;
(c) recevoir, grâce à la première imprimante à jet d'encre, une ou plusieurs valeurs d'enregistrement d'historique associées à la valeur d'identification de première tête d'impression de la part de cette ou ces deuxièmes imprimantes à jet d'encre (12b, 12c) ;
(d) stocker, grâce à la première imprimante à jet d'encre (12a), une valeur d'enregistrement d'historique la plus récente reçue de cette ou ces deuxièmes imprimantes à jet d'encre (12b, 12c) ; et
(e) incrémenter une première valeur d'enregistrement d'historique de la première imprimante à jet d'encre sur la base d'un certain nombre de points d'encre éjectés à partir de la cartouche de première tête d'impression à jet d'encre (20a) lorsque l'impression est réalisée après la mise en place de la cartouche de première tête d'impression à jet d'encre (20a) dans la première imprimante à jet d'encre (12a).

2. Procédé selon la revendication 1, **caractérisé en ce que** le procédé comprend en outre :
(f) après la mise en place de la cartouche de première tête d'impression à jet d'encre (20a) dans la première imprimante à jet d'encre (12a), la première imprimante à jet d'encre (12a) accédant à une valeur d'indication d'état de la cartouche de première tête d'impression à jet d'encre (20a) afin de déterminer si, oui ou non, la cartouche de première tête d'impression à jet d'encre (20a) a été utilisée.

3. Procédé selon la revendication 2, **caractérisé en ce que** les étapes (a), (b), (c), (d), (e) et (f) sont réalisées par un processeur dans la première imprimante à jet d'encre (12a).

4. Procédé selon l'une quelconque des revendications 1 à 3, **caractérisé en ce que** la valeur d'enregistrement d'historique est une valeur de comptage de points d'encre et que le procédé comprend en outre :
(g) après la réception d'une demande de la première imprimante à jet d'encre (12a), chacune des deuxièmes imprimantes à jet d'encre (12b, 12c) détermine si la valeur d'identification de première tête d'impression y est stockée ;
(h) la détermination, par cette ou ces deuxièmes imprimantes à jet d'encre (12b, 12c), de la valeur de comptage de points d'encre associée à la valeur d'identification de première tête d'impression ;
(i) la génération, par cette ou ces deuxièmes imprimantes à jet d'encre (12b, 12c), d'une ou plusieurs réponses incluant chacune la valeur de comptage de points d'encre associée à la valeur d'identification de première tête d'impression ;
(j) l'envoi des valeurs de comptage de points d'encre associées à la valeur d'identification de première tête d'impression à la première imprimante à jet d'encre (12a).

5. Procédé selon la revendication 4, **caractérisé en ce que** les étapes (g), (h), (i) et (j) sont réalisées par des processeurs des deuxièmes imprimantes à jet d'encre (12b, 12c).

6. Procédé selon l'une quelconque des revendications 1 à 5, **caractérisé en ce que** le procédé comprend en outre la détermination d'une valeur de niveau d'encre restant pour la cartouche de première tête d'impression à jet d'encre (20a) sur la base d'une première valeur d'enregistrement d'historique stockée dans la première imprimante à jet d'encre (12a).

7. Procédé selon l'une quelconque des revendications 1 à 6, **caractérisé en ce que** l'étape (d) comprend :
le choix d'une valeur d'enregistrement d'historique la plus élevée sur la base d'une comparaison entre la première valeur d'enregistrement d'historique, contenue dans la première imprimante à jet d'encre (12a) après la mise en place de la cartouche de première tête d'impression à jet d'encre (20a), après la mise en place, et cette ou ces valeurs d'enregistrement d'historique reçues des deuxièmes imprimantes à jet d'encre (12b, 12c).

8. Procédé selon l'une quelconque des revendications 1 à 7, **caractérisé en ce que** la valeur d'enregistrement d'historique est une valeur d'horodatage et que le procédé comprend en outre :
(k) la détermination, par cette ou ces deuxièmes imprimantes à jet d'encre (12b, 12c), d'une ou plusieurs valeurs d'horodatage associées à la valeur d'identification de première tête d'impression ; et
(1) la réception, par la première imprimante à jet d'encre (12a), de cette ou ces valeurs d'horodatage de la part des deuxièmes imprimantes à jet d'encre (12b, 12c).

9. Procédé selon la revendication 8, **caractérisé en ce que** le procédé comprend en outre :
la détermination d'une valeur d'horodatage la plus récente sur la base d'une comparaison entre une valeur d'horodatage contenue dans la première imprimante à jet d'encre (12a) après la mise en place de la cartouche de première tête d'impression à jet d'encre (20a) et cette ou ces valeurs d'horodatage reçues des deuxièmes imprimantes à jet d'encre (12b, 12c).

10. Système, comprenant :
une première imprimante à jet d'encre (12a) ;
une pluralité de deuxièmes imprimantes à jet d'encre (12b, 12c) ;
un appareil (10) configuré pour déterminer une quantité d'encre utilisée par une cartouche de première tête d'impression à jet d'encre (20a) mise en place dans la première imprimante à jet d'encre (12a), dans lequel la cartouche de première tête d'impression à jet d'encre (20a) comprend un dispositif de mémoire de première tête d'impression (22a) configuré pour stocker une valeur d'identification de première tête d'impression ; et
un réseau (24) auquel la première imprimante à jet d'encre (12a) et les deuxièmes imprimantes à jet d'encre (12b, 12c) sont connectées, **caractérisé en ce que**
la première imprimante à jet d'encre (12a) comprend un premier dispositif de mémoire (14a) configuré pour stocker une première valeur d'enregistrement d'historique, et un premier processeur (16a) configuré pour exécuter des instructions pour l'accès à la valeur d'identification de première tête d'impression avant d'utiliser la cartouche de première tête d'impression à jet d'encre (20a) après la mise en place, et générer une requête pour chercher de l'information concernant la valeur d'identification de première tête d'impression auprès des deuxièmes imprimantes à jet d'encre (12b, 12c) ;
cette ou ces deuxièmes imprimantes à jet d'encre (12b, 12c) dont chacune comprend :
un deuxième dispositif de mémoire (14b, 14c) configuré pour stocker une ou plusieurs valeurs d'identification de tête d'impression en association avec une ou plusieurs valeurs d'enregistrement d'historique ;
un deuxième processeur (16b, 16c) configuré pour exécuter des instructions pour déterminer si l'une quelconque des valeurs d'identification de tête d'impression correspond à la valeur d'identification de première tête d'impression, et déterminer une valeur d'enregistrement d'historique associée à la valeur d'identification de première tête d'impression ;
le premier processeur (16a) est en outre configuré pour exécuter des instructions pour déterminer une valeur d'enregistrement d'historique la plus récente sur la base d'une comparaison entre les valeurs d'enregistrement d'historique, et incrémenter une première valeur d'enregistrement d'historique stockée dans le premier dispositif de mémoire (22a) sur la base d'un certain nombre de points d'encre éjectés à partir de la cartouche de première tête d'enregistrement à jet d'encre (20a) après la mise en place dans la première imprimante à jet d'encre (12a) .

11. Système selon la revendication 10, **caractérisé en ce que**
le dispositif de mémoire de tête d'impression (22a) de la cartouche de première tête d'impression à jet d'encre (20a) est configuré pour stocker une valeur d'indication d'état qui indique un état d'utilisation ou un état de non-utilisation ; et
le premier processeur (16a) est configuré pour exécuter des instructions pour l'accès à la valeur d'indication d'état avant d'utiliser la cartouche de première tête d'impression à jet d'encre (20a) après la mise en place, déterminer si la cartouche de première tête d'impression à jet d'encre (30a) a été utilisée ou n'a pas été utilisée avant la mise en place de la cartouche de première tête d'impression à jet d'encre (20a) sur la base de la valeur d'indication d'état, et générer la requête lorsque la cartouche de première tête d'impression à jet d'encre (30a) a été utilisée.

12. Système selon la revendication 10 ou 11, **caractérisé en ce que**
le premier processeur (16a) est configuré pour exécuter des instructions pour déterminer une valeur de niveau d'encre restant pour la cartouche de première tête d'impression à jet d'encre (30a) sur la base d'une première valeur de comptage de points d'encre stockée dans le premier dispositif de mémoire (14a).

13. Système selon l'une quelconque des revendications 10 à 12, **caractérisé en ce que** la première valeur d'enregistrement d'historique est une première valeur de comptage de points d'encre et que le premier processeur (16a) est configuré pour exécuter des instructions pour stocker la première valeur de comptage de points d'encre dans le premier dispositif de mémoire (14a) en association avec la valeur d'identification de première tête d'impression.

14. Système selon l'une quelconque des revendications 10 à 13, **caractérisé en ce que**
les valeurs d'enregistrement d'historique sont des valeurs d'horodatage,
les deuxièmes processeurs (16b, 16c) sont configurés pour exécuter des instructions pour déterminer cette ou ces valeurs d'horodatage associées à la valeur d'identification de première tête d'impression ; et
le premier processeur (16a) est configuré pour exécuter des instructions pour recevoir cette ou ces valeurs d'horodatage de cette ou ces deuxièmes imprimantes à jet d'encre (12b, 12c).

15. Système selon la revendication 14, **caractérisé en ce que**
le premier processeur (16a) est configuré pour exécuter des instructions pour déterminer une valeur d'horodatage la plus récente sur la base d'une comparaison entre une première valeur d'horodatage contenue dans la première imprimante à jet d'encre (12a) après la mise en place de la cartouche de première tête d'impression à jet d'encre (20a) et cette ou ces valeurs d'horodatage reçues des deuxièmes imprimantes à jet d'encre (12b, 12c).
